# EUROPÄISCHE PATENTANMELDUNG

(11) **EP 4 318 691 A2**
(43) Veröffentlichungstag der Anmeldung: **07.02.2024**
(21) Anmeldenummer: 23188099.8
(22) Anmeldetag: 27.07.2023
(51) Int. Cl.: H01M 8/04119, H01M 8/04664, H01M 8/04828

(54) **VERFAHREN ZUM FESTSTELLEN DER DEGRADATION EINES BEFEUCHTERS**

(30) Priorität: 02.08.2022 DE 102022207984
(71) Anmelder: MAHLE International GmbH, 70376 Stuttgart (DE)
(72) Erfinder: AUER, Markus, 70435 Stuttgart (DE)
(74) Vertreter: BRP Renaud & Partner mbB Rechtsanwälte Patentanwälte Steuerberater

(57) **Zusammenfassung**

Die Erfindung betrifft ein Verfahren (5) zum Feststellen der Degradation eines Befeuchters (4) eines Brennstoffzellensystems (1) mit einem Brennstoffzellenstapel (2) und dem Befeuchter (4). Der Brennstoffzellenstapel (2) weist mehrere Brennstoffzellen (3) mit Kathoden auf.

In dem Verfahren werden:
- in einem Schritt A ein Ausgangsparameter des Brennstoffzellenstapels (2) bestimmt;
- in einem Schritt B basierend auf dem Ausgangsparameter ein Befeuchten der Katoden bewertet;
- in einem Schritt C, falls das Befeuchten der Katoden zu gering ist, ein Steuerparameter bestimmt und eine Steuergröße entsprechend nachgestellt;
- in einem Schritt D ein Diagnoseparameter bestimmt und basierend auf dem Diagnoseparameter die Degradation des Befeuchters (4) festgestellt.

Die Erfindung betrifft auch das Brennstoffzellensystem (1) zum Ausführen des Verfahrens (5).

## Beschreibung

Die Erfindung betrifft ein Verfahren zum Feststellen der Degradation eines Befeuchters eines Brennstoffzellensystems nach dem Oberbegriff des Anspruchs 1. Die Erfindung betrifft auch das Brennstoffzellensystem zum Ausführen des Verfahrens.

Ein Brennstoffzellensystem umfasst wenigstens einen Brennstoffzellenstapel mit mehreren Brennstoffzellen und ein Befeuchter wird in dem Brennstoffzellensystem zum Befeuchten von Kathoden der Brennstoffzellen eingesetzt. Während seiner Lebenszeit wird der Befeuchter zunehmend leistungsschwächer und überträgt zunehmend weniger Wasserdampf von der feuchten Seite auf die trockene Seite. Die Alterung des Befeuchters hängt dabei nicht nur von den Betriebsstunden des Befeuchters, sondern auch von äußeren Einflüssen ab. Die äußeren Einflüsse können beispielweise ein Betrieb des Befeuchters bei hohen Temperaturen, ein langer Stillstand des Befeuchters im trockenen Zustand, eine Vergiftung des Befeuchters durch Schadgase oder durch Flüssigkeiten wie Öl oder durch Feststoffe wie Staub oder Rost sein. Die Leistungsschwäche des Befeuchters führt zu einer niedrigen Feuchte von Kathoden der Brennstoffzellen des Brennstoffzellenstapels. Dadurch können sich Hotspots an Membranen der Brennstoffzellen bilden, die zu Pinholes und dadurch zur Mischung von H2 und Luft an den Membranen führen. Durch die reduzierte Befeuchtung der Kathode erhöht sich der Widerstand der Membrane und der Wirkungsgrad der Brennstoffzellen sinkt. Entsprechend sinkt auch die Leistung und die Lebensdauer des Brennstoffzellenstapels. Aus diesem Grund ist es wünschenswert, das Ende der sinnvollen Nutzungsdauer des Befeuchters möglichst genau zu bestimmen.

Die Aufgabe der Erfindung ist es daher, für ein Verfahren zum Feststellen der Funktionsfähigkeit bzw. der Degradation eines Befeuchters eines Brennstoffzellensystems eine verbesserte oder zumindest alternative Ausführungsform anzugeben, bei der die beschriebenen Nachteile überwunden werden. Die Aufgabe der Erfindung ist es auch, ein entsprechendes Brennstoffzellensystem zum Ausführen des Verfahrens bereitzustellen.

Diese Aufgaben werden erfindungsgemäß durch den Gegenstand der unabhängigen Ansprüche gelöst. Vorteilhafte Ausführungsformen sind Gegenstand der abhängigen Ansprüche.

Die vorliegende Erfindung beruht auf dem allgemeinen Gedanken, zum Feststellen der Degradation eines Befeuchters eines Brennstoffzellensystems eine Spannungsantwort des Brennstoffzellenstapels oder einen weiteren Parameter zu nutzen und daraus zu bestimmen, wie sehr die Wassertransferleistung des Befeuchters degradiert ist.

Das erfindungsgemäße Verfahren ist zum Feststellen der Degradation eines Befeuchters eines Brennstoffzellensystems vorgesehen. Das Brennstoffzellensystem weist dabei neben dem Befeuchter auch wenigstens ein Brennstoffzellenstapel mit mehreren Brennstoffzellen auf. Die Brennstoffzellen weisen dabei jeweils eine Kathode und eine Anode auf und der Befeuchter ist zum Befeuchten der Katoden der mehreren Brennstoffzellen ausgelegt. In dem Verfahren werden dabei die Schritte A, B, C, D nacheinander durchgeführt. In dem Schritt A wird zuerst ein Ausgangsparameter des Brennstoffzellenstapels bestimmt und in dem Schritt B wird ein Befeuchten der Katoden der mehreren Brennstoffzellen basierend auf dem bestimmten Ausgangsparameter bewertet. In dem Schritt C, falls das Befeuchten der Katoden der mehreren Brennstoffzellen zu gering ist, werden ein Steuerparameter zum Nachstellen des Befeuchtens bestimmt und eine Steuergröße entsprechend dem Steuerparameter nachgestellt. In dem Schritt D werden dann ein Diagnoseparameter bestimmt und die Degradation des Befeuchters basierend auf dem Diagnoseparameter festgestellt.

In den Schritten A-C des Verfahrens kann der Befeuchter nachgestellt werden und dadurch das mangelnde Befeuchten der Kathoden der Brennstoffzellen aufgrund der fortschreitenden Alterung des Befeuchters kompensiert werden. Das mangelnde Befeuchten der Kathoden der Brennstoffzellen führt allgemein zur Senkung der relativen Feuchtigkeit an den Brennstoffzellen und dadurch zur Senkung der Effizienz des Brennstoffzellenstapels. Das übermäßige Erhöhen der Wassermenge an den Kathoden führt dazu, dass Gaskanäle an den Kathoden partiell blockiert und der Widerstand von Membranen der Brennstoffzellen reduziert werden. Dadurch kann ein höherer Wirkungsgrad der Brennstoffzellen und dadurch des Brennstoffzellenstapels erreicht werden. In dem Schritt D des Verfahrens kann zudem festgestellt werden, wenn das mangelnde Befeuchten der Kathoden der Brennstoffzellen durch ein Nachstellen des Befeuchters nicht mehr kompensierbar ist. Daraus kann schließlich abgeleitet werden, wann der Befeuchter auszutauschen ist.

Unter dem Begriff "Größe" ist hier und weiter eine messbare Eigenschaft eines Zustands oder einer Komponente des Brennstoffzellensystems gemeint. Der Begriff "Parameter" bezeichnet dabei einen Wert der entsprechenden Größe. Mit dem "Nachstellen des Befeuchtens" ist allgemein eine Anpassung des Brennstoffzellensystems gemeint, die zum Erhöhen des Befeuchtens bzw. zum Erhöhen der relativen Feuchtigkeit der Kathoden der Brennstoffzellen führt.

Der im Schritt A bestimmte Ausgangsparameter kann beispielweise eine relative Feuchtigkeit am Eintritt der Kathode des Brennstoffzellenstapels sein. Die relative Feuchtigkeit des in die Kathode des Brennstoffzellenstapels einströmenden Gases kann eingangsseitig an dem Brennstoffzellenstapel gemessen werden. Basierend auf dem gemessenen Wert der relativen Feuchtigkeit kann beispielweise mittels eines Vergleichs mit einem vordefinierten Sollwert der relativen Feuchtigkeit bestimmt werden, ob das Befeuchten der Kathoden der Brennstoffzellen ausreichend oder mangelhaft ist.

Unter dem Begriff "Degradation des Befeuchters" ist in erster Linie die Degradation eines Membranstapels des Befeuchters und/oder einander gestapelten Membrane des Membranstapels des Befeuchters zu verstehen. Die Degradation des Befeuchters und/oder des Membranstapels des Befeuchters und/oder der einander gestapelten Membrane des Membranstapels des Befeuchters kann insbesondere durch die äußeren Einflüsse - beispielweise ein Betrieb des Befeuchters bei hohen Temperaturen, ein langer Stillstand des Befeuchters im trockenen Zustand, eine Vergiftung des Befeuchters durch Schadgase oder durch Flüssigkeiten wie Öl oder durch Feststoffe wie Staub oder Rost - bedingt sein. In dem Verfahren kann insbesondere die Degradation des Befeuchters und/oder des Membranstapels des Befeuchters und/oder der einander gestapelten Membrane des Membranstapels des Befeuchters an sich bestimmt werden. Die Degradation des Befeuchters kann als eine stetige Funktion bestimmt werden. Mit anderen Worten kann die Stärke bzw. das Ausmaß der Degradation des Befeuchters und/oder des Membranstapels des Befeuchters und/oder der einander gestapelten Membrane des Membranstapels des Befeuchters bestimmt werden.

Bei einer ersten Ausführungsform des Verfahrens kann vorgesehen sein, dass das Brennstoffzellensystem ein von einer Kühlflüssigkeit durchströmbares Kühlsystem zum Kühlen des Brennstoffzellenstapels aufweist. Der im Schritt C bestimmte Steuerparameter zum Nachstellen des Befeuchtens kann dann durch eine mittels des Kühlsystems nachstellbare Temperatur der Kühlflüssigkeit vorgegeben sein. Das Kühlsystem kann einen Wärmeübertrager und/oder ein Gebläse zum Kühlen der Kühlflüssigkeit aufweisen. Dann kann im Schritt C zum Nachstellen des Befeuchtens die Kühlleistung des Kühlsystems durch ein Nachstellen des Durchströmens durch den Wärmeübertrager und/oder durch ein Nachstellen des Gebläses erhöht werden. Falls also das Befeuchten der Katoden der mehreren Brennstoffzellen zu gering ist, kann das Befeuchten der Kathoden erhöht werden, indem die Temperatur der Kühlflüssigkeit abgesenkt wird. Die weiteren Betriebsbedingungen können dabei gleichbleiben. Das Absenken der Temperatur der Kühlflüssigkeit kann dabei durch das stärkere Durchströmen des Wärmeübertragers und/oder durch eine höhere Drehzahl des Gebläses erreicht werden. Die erste Ausführungsform des Verfahrens kann insbesondere bei einem Befeuchter, der kein Nachstellen der Leistung ermöglich, verwendet werden.

Alternativ zu der ersten Ausführungsform des Verfahrens kann der Befeuchter eingangsseitig und trockenluftseitig einen Bypass mit einem Bypass-Ventil zum Umströmen des Befeuchters aufweisen. Der im Schritt C bestimmte Steuerparameter zum Nachstellen des Befeuchtens kann dann durch eine Schließ-/Öffnungsstellung des Bypass-Ventils des Bypasses vorgegeben sein. Es versteht sich, dass das Bypass-Ventil mehrere voneinander abweichende Schließ-/Öffnungsstellungen aufweisen kann und dadurch der Bypass abweichend stark geöffnet/geschlossen werden kann. Das Nachstellen in dem Schritt C kann beispielweise durch ein stärkeres Schließen des Bypass-Ventils realisiert sein. Ist der Bypass stärker als vorher geschlossen, so strömen eine höhere Luftmenge über den Befeuchter und eine kleinere Luftmenge über den Bypass. Entsprechend wird eine höhere Luftmenge in dem Befeuchter befeuchtet und die relative Feuchtigkeit der gesamten Luftmenge steigt. Entsprechend werden die Kathoden der Brennstoffzellen stärker befeuchtet. Die im Schritt C nachgestellte Schließ-/Öffnungsstellung des Bypass-Ventils kann dann zur Standardeinstellung des Bypass-Ventils werden.

Der Bypass mit dem Bypass-Ventil kann insbesondere in dem Brennstoffzellensystem eingesetzt werden, bei dem der Befeuchter für niedrige Lastpunkte der Brennstoffzellen bzw. des Brennstoffstapels ausgelegt ist. Bei hohen Lastpunkten bzw. hohen Lasten des Brennstoffzellenstapels ist der Bypass für eine vergleichsweise identisch starke Befeuchtung bzw. für eine ähnlich hohe Wasserbeladung des Gases am Eintritt der Brennstoffzellen stärker geöffnet als bei niedrigen Lastpunkten bzw. niedrigen Lasten des Brennstoffzellenstapels. Um die Wassermenge an den Kathoden zu erhöhen, kann dann bei hohen Lastpunkten bzw. hohen Lasten des Brennstoffzellenstapels der Bypass stärker geschlossen werden. Es versteht sich, dass das Öffnen/Schließen des Bypasses durch die Änderung der Schließ-/Öffnungsstellung des Bypass-Ventils erfolgt.

Bei einer zweiten Ausführungsform des Verfahrens kann dann der im Schritt D bestimmte Diagnoseparameter durch eine zeitliche Änderung der Schließ-/Öffnungsstellung des Bypass-Ventils über die Lebensdauer des Befeuchters gegenüber einem vordefinierten Steuerungskennfeld des Bypass-Ventils vorgegeben sein. Die Degradation des Befeuchters kann dann basierend auf der bestimmten zeitlichen Änderung der Schließ-/Öffnungsstellung des Bypass-Ventils festgestellt werden. Mit anderen Worten kann die Degradation des Befeuchters anhand der schleichenden Änderung der Schließ-/Öffnungsstellung bzw. der Standarteinstellungen des Bypass-Ventils gegenüber dem vordefinierten Steuerungskennfeld festgestellt werden. Die zweite Ausführungsform des Verfahrens kann insbesondere bei dem geregelten Bypassventil und/oder dem geregelten Befeuchter verwendet werden.

Bei einer dritten Ausführungsform des Verfahrens kann der im Schritt D bestimmte Diagnoseparameter durch eine Änderung einer Spannung in einer Spannung/Strom-Kennlinie des Brennstoffzellenstapels beim Nachstellen der Steuergröße im Schritt C vorgegeben sein. Mit anderen Worten können die Spannung/Strom-Kennlinien des Brennstoffzellenstapels vor und nach dem Nachstellen der Steuergröße im Schritt C gemessen und miteinander verglichen werden. Dann kann anhand der Änderung der Spannungen des Brennstoffzellenstapels festgestellt werden, ob das Befeuchten der Katoden der mehreren Brennstoffzellen durch die Änderung der Steuergröße im Schritt C erhöht oder nicht erhöht wird. Beispielweise kann dazu das Bypassventil kurzzeitig weiter geschlossen werden und die Spannung/Strom-Kennlinien des Brennstoffzellenstapels vor und nach dem Verschließen des Bypassventils bestimmt werden. Anhand der gemessenen Spannung/Strom-Kennlinien des Brennstoffzellenstapels kann dann die Degradation des Befeuchters festgestellt werden.

Beim Feststellen der Degradation können die gemessenen Spannungen vor und nach dem Nachstellen der Steuergröße im Schritt C miteinander verglichen werden. Beim Steigen der gemessenen Spannung nach dem Nachstellen der Steuergröße im Schritt C bei wenigstens einem vorgegebenen Stromwert kann dann die Degradation des Befeuchters bewertet werden. Dabei können die Spannungen bei einem einzigen vorgegebenen Stromwert oder bei mehreren vorgegebenen Stromwerten oder jedoch die gesamten Spannung/Strom-Kennlinien miteinander vergleichen werden.

Wird das Befeuchten der Kathoden erhöht, so steigt entsprechend auch die relative Feuchtigkeit an den Kathoden und dadurch auch die Spannung an dem Brennstoffzellenstapel. Durch das Nachstellen der Steuergröße im Schritt C steigen demnach beim nicht degradierten Befeuchter auch das Befeuchten der Kathoden und die Spannung an dem Brennstoffzellenstapel. Ist der Befeuchter dagegen degradiert, so wird durch das Nachstellen der Steuergröße im Schritt C das Befeuchten der Kathoden nicht vergleichsweise stark erhöht und demnach steigt die Spannung an dem Brennstoffzellenstapel nicht vergleichsweise gleich stark.

Die Spannung kann dabei mittels einer Klemmspannungsmessung an dem Brennstoffzellenstapel bestimmt werden. Alternativ kann die Spannung aus einer integrierten Steuerungseinheit des Brennstoffzellenstapels abgelesen werden.

Die Spannungsdegradation an dem Brennstoffzellenstapel kann nicht ausschließlich durch die Degradation des Befeuchters hervorgerufen werden. So kann die Spannung auch von der Degradation der Brennstoffzellen oder von reversiblen Effekten - wie beispielweise vom Ansammeln von CO auf Anoden der Brennstoffzellen - anhängig sein. Um die oben genannten Faktoren auszuschließen, können weitere Maßnahmen beim Bestimmen der Spannung an dem Brennstoffzellenstapel vorgesehen sein. So kann beim Bestimmen der Spannung ein vorgegebener stationärer Betriebspunkt des Brennstoffzellensystems angefahren werden. Denkbar ist es, dass beim Feststellen der Degradation ein vorliegendes Degradationsmodell des Brennstoffzellenstapels berücksichtigt wird. Das Degradationsmodell der Brennstoffzellen kann dabei eine erwartete Spannung/Strom-Kennlinie unter Berücksichtigung der Alterung der Brennstoffzellen wiedergeben. Dann kann beim Feststellen der Degradation die nach dem Nachstellen der Steuergröße im Schritt C gemessene Spannung/Strom-Kennlinie zusätzlich mit der oben genannten erwarteten Spannung/Strom-Kennlinie verglichen werden. Stimmen die Spannung/Strom-Kennlinien überein, so liegt die Degradation des Befeuchters nicht vor. Liegt die nach dem Nachstellen der Steuergröße im Schritt C gemessene Spannung/Strom-Kennlinie unter der erwarteten Spannung/Strom-Kennlinie, so liegt die Degradation des Befeuchters vor. Denkbar ist es auch, dass vor dem Bestimmen der Spannung eine vorgegebene O2/O2-Bedingung und/oder eine vorgegebene H2/H2-Bedingung auf Anoden und Kathoden der Brennstoffzellen des Brennstoffzellenstapels sichergestellt werden.

Die dritte Ausführungsform des Verfahrens kann insbesondere eingesetzt werden, wenn das Brennstoffzellensystem die relative Feuchtigkeit am Eintritt der Kathoden des Brennstoffzellenstapels nicht kontinuierlich messen kann und/oder kein geregelten Bypassventil und/oder keinen geregelten Befeuchter aufweist.

Die Erfindung betrifft auch ein Brennstoffzellensystem mit wenigstens einem Brennstoffzellenstapel mit mehreren Brennstoffzellen und mit einem Befeuchter. Die Brennstoffzellen weisen dabei jeweils eine Kathode und eine Anode auf und der Befeuchter ist zum Befeuchten der Katoden der mehreren Brennstoffzellen ausgelegt. Das Brennstoffzellensystem ist dabei zum Ausführen des oben beschriebenen Verfahrens ausgelegt. Um Wiederholungen zu vermeiden, wird an dieser Stelle auf die obigen Ausführungen verwiesen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine schematische Ansicht eines erfindungsgemäßen Brennstoffzellensystems;
- Fig. 2: ein schematisches Ausführungsschema eines erfindungsgemäßen Verfahrens.

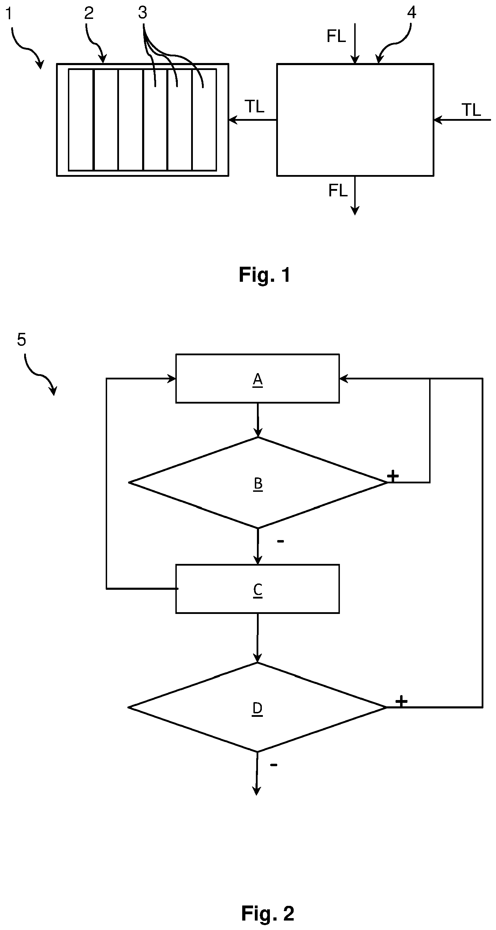

Fig. 1 zeigt eine schematische Ansicht eines erfindungsgemäßen Brennstoffzellensystems 1. Das Brennstoffzellensystem 1 weist dabei einen Brennstoffzellenstapel 2 mit mehreren Brennstoffzellen 3 und einen Befeuchter 4 auf. Das Brennstoffzellensystem 1, der Brennstoffzellenstapel 2, die Brennstoffzellen 3 und der Befeuchter 4 können auf eine dem Fachmann bekannte Weise aufgebaut sein. Der Befeuchter 4 ist zum Befeuchten von Katoden - hier nicht gezeigt - der mehreren Brennstoffzellen 3 vorgesehen. Der Befeuchter 4 wird dabei von einer Trockenluft TL und einer Feuchtluft FL durchströmt. In dem Befeuchter 4 wird die Trockenluft TL von der Feuchtluft FL befeuchtet und strömt weiter zu dem Brennstoffzellenstapel 2.

Fig. 2 zeigt ein schematisches Ausführungsschema eines erfindungsgemäßen Verfahrens 5 zum Feststellen der Degradation des Befeuchters 4 des Brennstoffzellensystems 1 in Fig. 1. Das Brennstoffzellensystem 1 in Fig. 1 ist zum Ausführen des Verfahrens 5 ausgelegt.

In dem Verfahren 5 werden dabei Schritte A, B, C, D nacheinander durchgeführt. In dem Schritt A wird zuerst ein Ausgangsparameter des Brennstoffzellenstapels 2 bestimmt und in dem Schritt B wird ein Befeuchten der Katoden der mehreren Brennstoffzellen 3 basierend auf dem bestimmten Ausgangsparameter bewertet. Falls das Befeuchten der Katoden der mehreren Brennstoffzellen 3 zu gering ist, werden im Schritt C ein Steuerparameter zum Nachstellen des Befeuchtens bestimmt und eine Steuergröße entsprechend dem Steuerparameter nachgestellt. In dem Schritt D werden dann ein Diagnoseparameter bestimmt und die Degradation des Befeuchters 4 basierend auf dem Diagnoseparameter festgestellt.

In den Schritten A-C des Verfahrens 5 wird der Befeuchter 4 nachgestellt und dadurch das mangelnde Befeuchten der Kathoden der Brennstoffzellen 3 aufgrund der fortstreitenden Alterung des Befeuchters 4 kompensiert. In dem Schritt D des Verfahrens 5 wird festgestellt, ob das mangelnde Befeuchten der Kathoden der Brennstoffzellen 3 durch ein Nachstellen des Befeuchters 4 nicht mehr kompensierbar ist. Daraus kann schließlich abgeleitet werden, wann der Befeuchter 4 auszutauschen ist.

Im Folgenden wird das Verfahren 5 anhand Ausführungsbeispiele näher erläutert. Es versteht sich, dass diese Ausführungsbeispiele die Erfindung nicht einschränken und lediglich einem besseren Verständnis dienen.

In dem einen Ausführungsbeispiel umfasst das Brennstoffzellensystem 1 den Befeuchter 4, der für niedrige Lastpunkte der Brennstoffzellen 3 bzw. des Brennstoffstapels 2 ausgelegt ist. Zudem umfasst das Brennstoffzellensystem 1 eingangsseitig und trockenseitig des Befeuchters 4 einen Bypass mit einem steuerbaren Bypass-Ventil. Im Betrieb der Brennstoffzellen 3 bzw. des Brennstoffstapels 2 kann durch einen stärker geöffneten Bypass bzw. durch das stärker geöffnete Bypass-Ventil die Wassermenge an den Kathoden der Brennstoffzellen 3 reduziert werden. Im Betrieb der Brennstoffzellen 3 bzw. des Brennstoffstapels 2 kann die Wassermenge durch den stärker geschlossenen Bypass bzw. das stärker geschlossene Bypass-Ventil die Wassermenge an den Kathoden der Brennstoffzellen 3 erhöht werden. Mit anderen Worten kann die Wassermenge an den Kathoden der Brennstoffzellen 3 bzw. das Befeuchten der Kathoden der Brennstoffzellen 3 durch eine Schließ-/Öffnungsstellung des Bypass-Ventils des Bypasses angepasst werden.

In dem Verfahren 5 kann dann im Schritt A die relative Feuchtigkeit des Brennstoffzellenstapels 2 - hier der Ausgangsparameter - eingangsseitig an dem Brennstoffzellenstapel 2 gemessen werden. Im Schritt B kann dann bewertet werden, ob die relative Feuchtigkeit des Brennstoffzellenstapels 2 und dadurch das Befeuchten der Kathoden 3 ausreichend ist. Falls das Befeuchten der Katoden der Brennstoffzellen 3 zu gering ist, können im Schritt C die zum Erhöhen des Befeuchtens der Kathoden notwendige Schließ-/Öffnungsstellung des Bypass-Ventils - hier der Steuerparameter - bestimmt werden. Anschließend kann ein Durchströmungsgrad des Bypasses - hier die Steuergröße - durch die Änderung der aktuellen Schließ-/Öffnungsstellung des Bypass-Ventils auf die im Schritt C bestimmte Schließ-/Öffnungsstellung des Bypass-Ventils entsprechend angepasst werden. Im Schritt D kann dann bestimmt werden, ob die Spannung in einer Spannung/Strom-Kennlinie des Batteriezellenstapels 2 - hier der Diagnoseparameter - nach der Änderung der Schließ-/Öffnungsstellung des Bypass-Ventils im Schritt C einer erwarteten Spannung entspricht oder nicht.

In dem zweiten Ausführungsbeispiel ist das Brennstoffzellensystem 1 identisch zu dem Brennstoffzellensystem 1 in dem ersten Ausführungsbeispiel aufgebaut. Der Bypass-Ventil an dem Bypass ist jedoch regelbar.

Die Schritte A-C des Verfahrens 5 sind in dem Brennstoffzellensystem 1 nach dem ersten Ausführungsbeispiel und nach dem zweiten Ausführungsbeispiel identisch. In dem Schritt D wird hier jedoch abweichend zu dem ersten Ausführungsbeispiel eine zeitliche Änderung der Schließ-/Öffnungsstellung des Bypass-Ventils - hier der Diagnoseparameter - bestimmt. Die zeitliche Änderung wird dabei über die Lebensdauer des Befeuchters 4 gegenüber einem vordefinierten Steuerungskennfeld des Bypass-Ventils betrachtet und basierend darauf wird auf die Degradation des Befeuchters 4 geschlossen.

In dem dritten Ausführungsbeispiel umfasst das Brennstoffzellensystem 1 den Befeuchter 4, der für untere Lastpunkte der Brennstoffzellen 3 bzw. des Brennstoffzellenstapels 2 unterdimensioniert ist und primär auf hohe Lastpunkte der Brennstoffzellen 3 bzw. des Brennstoffzellenstapels 2 ausgelegt ist. In dem dritten Ausführungsbeispiel kann das Brennstoffzellensystem 1 auch keinen Bypass mit dem Bypass-Ventil aufweisen. Dagegen weist das Brennstoffzellensystem 1 ein Kühlsystem zum Kühlen des Brennstoffzellenstapels 2 auf. Das Kühlsystem ist von einer Kühlflüssigkeit durchströmbar und umfasst einen Wärmeübertrager und/oder ein Gebläse zum Kühlen der Kühlflüssigkeit.

Die Schritte A-B und D des Verfahrens 5 sind in dem Brennstoffzellensystem 1 nach dem ersten Ausführungsbeispiel und nach dem dritten Ausführungsbeispiel identisch. Falls im Schritt B das zu geringe Befeuchten der Katoden der Brennstoffzellen 3 festgestellt wird, wird im Schritt C abweichend die Kühlleistung des Kühlsystems - hier die Steuergröße - durch eine Senkung der Temperatur der Kühlflüssigkeit - hier der Steuerparameter - erhöht. Dazu können das Durchströmen des Wärmeübertrager und/oder die Drehzahl des Gebläses erhöht werden. Das Durchströmen des Wärmeübertragers kann beispielweise durch ein stärkeres Öffnen eines zu dem Wärmeübertrager führendes Ventils vorgenommen werden.

## Patentansprüche

1. Verfahren (5) zum Feststellen der Degradation eines Befeuchters (4) eines Brennstoffzellensystems (1), wobei das Brennstoffzellensystem (1) wenigstens ein Brennstoffzellenstapel (2) mit mehreren Brennstoffzellen (3) mit jeweils einer Kathode und einer Anode und den Befeuchter (4) zum Befeuchten der Katoden der mehreren Brennstoffzellen (3) aufweist,
wobei in dem Verfahren:
- in einem Schritt A ein Ausgangsparameter des Brennstoffzellenstapels (2) bestimmt wird;
- in einem Schritt B basierend auf dem bestimmten Ausgangsparameter ein Befeuchten der Katoden der mehreren Brennstoffzellen (3) bewertet wird;
- in einem Schritt C, falls das Befeuchten der Katoden der mehreren Brennstoffzellen (3) zu gering ist, ein Steuerparameter zum Nachstellen des Befeuchtens (5) bestimmt wird und eine Steuergröße entsprechend dem Steuerparameter nachgestellt wird;
- in einem Schritt D ein Diagnoseparameter bestimmt wird und basierend auf dem Diagnoseparameter die Degradation des Befeuchters (4) festgestellt wird.

2. Verfahren nach Anspruch 1,
**dadurch gekennzeichnet,**
**dass** der im Schritt A bestimmte Ausgangsparameter eine relative Feuchtigkeit eines zu den Kathoden des Brennstoffzellenstapels (2) strömenden Gases ist, die eingangsseitig an dem Brennstoffzellenstapel (2) gemessen wird.

3. Verfahren nach Anspruch 1 oder 2,
**dadurch gekennzeichnet,**
- **dass** das Brennstoffzellensystem (1) ein von einer Kühlflüssigkeit durchströmbares Kühlsystem zum Kühlen des Brennstoffzellenstapels (2) aufweist; und
- **dass** der im Schritt C bestimmte Steuerparameter zum Nachstellen des Befeuchtens durch eine mittels des Kühlsystems nachstellbare Temperatur der Kühlflüssigkeit vorgegeben ist.

4. Verfahren nach Anspruch 3,
**dadurch gekennzeichnet,**
- **dass** das Kühlsystem einen Wärmeübertrager und/oder ein Gebläse zum Kühlen der Kühlflüssigkeit aufweist; und
- **dass** im Schritt C zum Nachstellen des Befeuchtens die Kühlleistung des Kühlsystems durch ein Nachstellen des Durchströmens durch den Wärmeübertrager und/oder durch ein Nachstellen des Gebläses erhöht wird.

5. Verfahren nach Anspruch 1 oder 2,
**dadurch gekennzeichnet,**
- **dass** der Befeuchter (4) eingangsseitig und trockenluftseitig einen Bypass mit einem Bypass-Ventil zum Umströmen des Befeuchters (4) aufweist; und
- **dass** der im Schritt C bestimmte Steuerparameter zum Nachstellen des Befeuchtens durch eine Schließ-/Öffnungsstellung des Bypass-Ventils des Bypasses vorgegeben ist.

6. Verfahren nach Anspruch 5,
**dadurch gekennzeichnet,**
- **dass** der im Schritt D bestimmte Diagnoseparameter durch eine zeitliche Änderung der Schließ-/Öffnungsstellung des Bypass-Ventils über die Lebensdauer des Befeuchters (4) gegenüber einem vordefinierten Steuerungskennfeld des Bypass-Ventils vorgegeben ist; und
- **dass** die Degradation des Befeuchters (4) basierend auf der bestimmten zeitlichen Änderung der Schließ-/Öffnungsstellung des Bypass-Ventils festgestellt wird.

7. Verfahren nach einem der Ansprüche 1 bis 5,
**dadurch gekennzeichnet,**
**dass** der im Schritt D bestimmte Diagnoseparameter durch eine Änderung einer Spannung in einer Spannung/Strom-Kennlinie des Brennstoffzellenstapels (2) beim Nachstellen der Steuergröße im Schritt C ist.

8. Verfahren nach Anspruch 7,
**dadurch gekennzeichnet,**
**dass** beim Feststellen der Degradation die Spannungen vor und nach dem Nachstellen der Steuergröße im Schritt C miteinander verglichen werden, wobei beim Steigen der gemessenen Spannung nach dem Nachstellen der Steuergröße im Schritt C bei wenigstens einem vorgegebenen Stromwert der Spannung/Strom-Kennlinie die Degradation des Befeuchters (4) bewertet wird.

9. Verfahren nach Anspruch 7 oder 8,
**dadurch gekennzeichnet,**
- **dass** die Spannung mittels einer Klemmspannungsmessung an dem Brennstoffzellenstapel (2) bestimmt wird; oder
- **dass** die Spannung aus einer integrierten Steuerungseinheit des Brennstoffzellenstapels (2) abgelesen wird.

10. Verfahren nach einem der Ansprüche 7 bis 9,
**dadurch gekennzeichnet,**
- **dass** beim Bestimmen der Spannung ein vorgegebener stationärer Betriebspunkt des Brennstoffzellensystems (1) angefahren wird; und/oder
- **dass** beim Feststellen der Degradation ein vorliegendes Degradationsmodell des Brennstoffzellenstapels (2) berücksichtigt wird; und/oder
- **dass** vor dem Bestimmen der Spannung eine vorgegebene O2/O2-Bedingung auf Anoden und Kathoden der Brennstoffzellen (3) des Brennstoffzellenstapels (2) sichergestellt wird; und/oder
- **dass** vor dem Bestimmen der Spannung eine vorgegebene H2/H2-Bedingung auf Anoden und Kathoden der Brennstoffzellen (3) des Brennstoffzellenstapels (2) sichergestellt wird.

11. Brennstoffzellensystem (1) mit wenigstens einem Brennstoffzellenstapel (2) mit mehreren Brennstoffzellen (3) mit jeweils einer Kathode und einer Anode und mit einem Befeuchter (4) zum Befeuchten der Katoden der mehreren Brennstoffzellen (3), wobei das Brennstoffzellensystem (1) zum Ausführen des Verfahrens (5) nach einem der vorangehenden Ansprüche ausgelegt ist.
